Europäisches Patentamt

European Patent Office

Office européen des brevets

(11) Veröffentlichungsnummer: **0 268 845 B1**

## (12) EUROPÄISCHE PATENTSCHRIFT

(45) Veröffentlichungstag der Patentschrift: **15.04.92**

(51) Int. Cl.⁵: **G01L 9/12**

(21) Anmeldenummer: **87115653.5**

(22) Anmeldetag: **26.10.87**

(54) Membrankondensator zur Messung sehr geringer pneumatischer Wechseldrücke.

(30) Priorität: **28.11.86 DE 3640718**

(43) Veröffentlichungstag der Anmeldung:
**01.06.88 Patentblatt 88/22**

(45) Bekanntmachung des Hinweises auf die
Patenterteilung:
**15.04.92 Patentblatt 92/16**

(84) Benannte Vertragsstaaten:
**DE FR GB IT NL SE**

(56) Entgegenhaltungen:
**US-A- 2 808 545**

**JOURNAL OF PHYSICS E SCIENTIFIC IN-
STRUMENTS, Band 9, September 1976, Seiten 730-731; N. BIGNELL: "Radial tensioning
of diaphragms for micromanometers"**

(73) Patentinhaber: **Hartmann & Braun Aktiengesellschaft
Gräfstrasse 97
W-6000 Frankfurt am Main 90(DE)**

(72) Erfinder: **Apel, Willi
Schalkwiesenweg 9
W-6000 Frankfurt 90(DE)**
Erfinder: **Fabinski, Walter
An der Landwehr 70
W-6239 Kriftel(DE)**
Erfinder: **Jezdinsky, Rudolf
Am Ebelfeld 10
W-6000 Frankfurt 90(DE)**

EP 0 268 845 B1

## Beschreibung

Die Erfindung bezieht sich auf einen Membrankondensator zur Messung sehr geringer pneumatischer Wechseldrücke, insbesondere in Gasanalysengeräten mit optopneumatischen Detektoren gemäß dem Oberbegriff des Anspruchs 1.

Ein derartiger Membrankondensator ist aus dem DE-GM 79 22 944 bekannt. Dieser Membrankondensator weist eine Festelektrode aus Metall und einen um diese mit Abstand angeordneten ringförmigen Dorn mit einem Fußteil auf. Die Festelektrode und der Fußteil des ringförmigen Dorns sind auf einer Keramikplatte befestigt. Die Membran des Kondensators ist in einer Fassung befestigt, die aus zwei ringförmigen Teilen besteht, einem flachen Ring und einem weiteren Ring, dessen Querschnittsfläche von rechtwinkliger Gestalt ist. Der ringförmige Fassungsteil besitzt ein Innenfeingewinde, mit dem die Fassung auf den mit einem entsprechenden Gegengewinde versehenen Dorn aufgeschraubt ist. Die Spannung der Membran erfolgt durch Verdrehen der Fassung für die Membran gegenüber dem ringförmigen Dorn. Die Höhe des ringförmigen Dornes gegenüber der Festelektrode bestimmt den Abstand zwischen Membran und Festelektrode. Derartige Membrankondensatoren sind sehr aufwendig in der Fertigung. Außerdem existieren große gasberührte Metallfächen, die bei aggressiven Gasen chemisch beständige Metalle erfordern.

Der Erfindung liegt die Aufgabe zugrunde, einen Membrankondensator der eingangs genannten Art zu schaffen, der einfacher zu fertigen ist und bei dem die gasberührten Metallflächen auf ein Minimum reduziert sind.

Diese Aufgabe wird erfindungsgemäß durch die im kennzeichnenden Teil des Anspruchs 1 angegebenen Merkmale gelöst.

Die Erfindung wird durch die Merkmale der Unteransprüche weitergebildet.

Die Erfindung wird im folgenden mit ihren weiteren Einzelheiten anhand eines in den Zeichnungen dargestellten Ausführungsbeispiels näher erläutert. Die Zeichnungen zeigen verschiedene Ansichten eines Membrankondensators nach der Erfindung, und zwar

Figur 1 eine Ansicht der Unterseite,
Figur 2 einen Schnitt entlang der Linie A - B in der Figur 1,
Figur 3 ein Detail der Figur 2 in vergrößerter Darstellung und
Figur 4 eine Draufsicht.

Gleiche Bauteile sind mit den gleichen Bezugszeichen versehen.

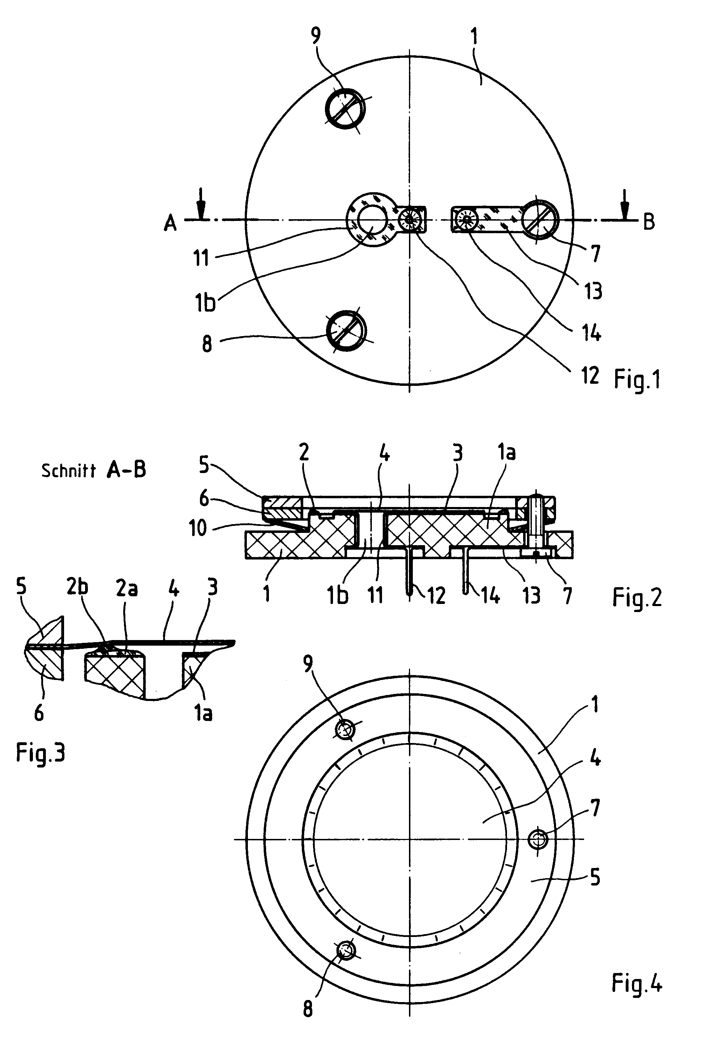

Eine kreisförmige Keramikgrundplatte 1, deren Unterseite in der Figur 1 dargestellt ist, ist in der Figur 2 geschnitten dargestellt. Die Keramikgrundplatte 1 weist eine konzentrisch angeordnete zylinderförmige Erhebung 1a auf. Auf dem Außenbereich der zylinderförmigen Erhebung 1a der Keramikgrundplatte 1 ist durch Materialauftrag ein ringförmiger Dorn 2 aufgebracht. Innerhalb des ringförmigen Dorns 2 ist auf der zylinderförmigen Erhebung 1a der Keramikplatte 1 eine als Festelektrode 3 dienende kreisförmige Metallschicht aufgebracht. Eine Metallmembran 4 ist in an sich bekannter Weise zwischen zwei Ringen 5, 6, die eine Spannringanordnung bilden, gehalten. Die Metallmembran 4 liegt auf dem ringförmigen Dorn 2 auf. Drei gleichmäßig über den Umfang der aus den Ringen 5, 6 gebildeten Spannringanordnung verteilte Schrauben 7, 8, 9 verbinden die Spannringanordnung mit der Keramikgrundplatte 1. Die Spannung der Metallmembran 4 ist über die Schrauben 7, 8, 9 einstellbar. Eine Tellerfeder 10 die entsprechend der Anordnung der Schrauben 7, 8, 9 mit Löchern versehen ist, dient dabei zur Sicherung der Schrauben gegen ein unbeabsichtiges Lösen und nimmt die durch das Gewicht der Ringe 5, 6 entstehenden Kräfte auf. Die Keramikgrundplatte 1 weist eine Öffnung 1b auf, deren Wandfläche mit einer Metallschicht 11 versehen ist. Die Öffnung 1b stellt die Gasverbindung zu dem Innenraum des Membrankondensators her. Die Festelektrode 3 ist über die Metallschicht 11 mit einem ersten Kontaktabgriff 12 elektrisch verbunden. Die elektrische Verbindung der Metallmembran 4 mit einem weiteren Kontaktabgriff 14 erfolgt über die elektrisch leitenden Ringe 5, 6 sowie über die Schraube 7 und eine Leiterbahn 13.

Die Figur 3 zeigt ein Detail der Figur 2 in vergrößerter Darstellung. Der ringförmige Dorn 2 besteht aus zwei Schichten 2a und 2b, die im Außenbereich der zylinderförmigen Erhebung 1a der Keramikgrundplatte 1 aufgebracht sind. Die Schichten 2a und 2b sind in an sich bekannter Weise aus Glas oder einem anderen Material in Dickschichttechnik auf die Keramikgrundplatte 1 gedruckt. Die untere Schicht 2a ist als breiter Ring ausgebildet, während die oberste Schicht 2b als schmaler Ring mit balliger Oberfläche im Außenbereich der unteren Schicht 2a ausgebildet ist. Die Gesamthöhe des ringförmigen Dorns 2 bestimmt den Abstand zwischen der Festelektrode 3 und der Metallmembran 4 des Membrankondensators und liegt je nach Anwendungszweck in der Größenordnung von 40 bis 150 mym. Bei Bedarf kann die untere Schicht 2a auch in mehreren Arbeitsgängen, d. h. in mehreren Schichten, aufgebracht werden. Wie insbesondere die Figur 3 zeigt, verhindert die Anordnung der obersten Schicht 2b im Außenbereich der darunterliegenden Schicht, daß die Metallmembran 4 beim Spannen auf der Außenkante der zylinderförmigen Erhebung 1a der Keramikgrundplatte 1 zur Auflage kommt. Die ballige Oberfläche der obersten Schicht 2b erleichtert das Spannen der Metallmembran 4 und verbessert die Abdichtung zwischen dem ringförmigen Dorn 2 und der Metallmembran 4.

Die Figur 4 zeigt eine Draufsicht auf den oben anhand der Figuren 1 bis 3 beschriebenen Membrankondensator. Die Metallmembran 4 und der obere Ring 5 Spannringanordnung verdecken den größten Teil der Keramikgrundplatte 1.

Die Oberfläche der zylinderförmigen Erhebung 1a besitzt eine Planizität von kleiner 3 mym über den gesamten Querschnitt. Die Festelektrode 3 besteht aus einem gegen aggressive Gase beständigem Metall, das z. B. in Dünnschichttechnik aufgebracht ist. Obwohl auch andere bekannte Verfahren, wie Dickschichttechnik oder chemische oder galvanische Verfahren, hierzu verwendet werden können. Die Dicke der Festelektrode 3 ist kleiner als 3 mym. Der Außendurchmesser des ringförmigen Dorns 2 liegt zwischen 10 und 20 mm.

## Patentansprüche

1. Membrankondensator zur Messung sehr geringer pneumatischer Wechseldrücke, insbesondere in Gasanalysengeräten mit optopneumatischen Detektoren, mit einer Keramikgrundplatte, die einen ringförmigen Dorn trägt, über den eine in einer Spannringanordnung gehaltene Metallmembran gespannt ist, die die eine Elektrode des Membrankondensators bildet, und mit einer innerhalb des ringförmigen Dorns angeordneten Festelektrode, die mit der Keramikgrundplatte verbunden ist und die andere Elektrode des Membrankondensators bildet, dadurch gekennzeichnet,
  - daß die Keramikgrundplatte (1) eine zylinderförmige Erhebung (1a) aufweist, die in ihrem Außenbereich den ringförmigen Dorn (2) und in ihrem Innenbereich die Festelektrode (3) trägt,
  - daß der ringförmige Dorn (2) durch Materialauftrag auf die Keramikgrundplatte (1) gebildet ist, wobei der ringförmige Dorn (2) aus mindestens zwei Schichten (2a, 2b) besteht, von denen mindestens die unterste Schicht (2a) als breiter Ring ausgebildet ist und die oberste Schicht (2b) als schmaler Ring ausgebildet ist, der im Außenbereich des breiten Rings angeordnet ist,
  - daß die Auflagefläche des ringförmigen Dorns (2) für die Membranelektrode (4) ballig ausgebildet ist,
  - daß die Festelektrode (3) durch Auftrag einer Metallschicht auf die Keramikgrundplatte (1) gebildet ist,
  - daß die Metallmembran (4) zwischen zwei Ringen (5, 6) gehalten ist, deren Innendurchmesser größer als der Außendurchmesser des ringförmigen Dorns (2) und größer als der Außendurchmesser der zylinderförmigen Erhebung (1a) der Keramikgrundplatte (1) ist,
  - daß die aus den miteinander verbundenen Ringen (5, 6) gebildete Spannringanordnung durch mindestens drei über den Umfang der Spannringanordnung verteilte Schrauben (7, 8, 9) mit der Keramikgrundplatte (1) verbunden ist, wobei die Spannung der Metallmembran (4) durch Änderung des Abstands zwischen den Ringen (5, 6) der Spannringanordnung und der Keramikgrundplatte (1) einstellbar ist, und
  - daß eine Tellerfeder (10), deren Innendurchmesser größer als der Außendurchmesser des ringförmigen Dorns (2) ist, zwischen den Ringen (5, 6) der Spannringanordnung und der Keramikgrundplatte (1) angeordnet ist.

2. Membrankondensator nach Anspruch 1, dadurch gekennzeichnet, daß die Tellerfeder (10) mit Durchgangslöchern versehen ist und daß die Schrauben (7, 8, 9) durch die Durchgangslöcher geführt sind.

3. Membrankondensator nach Anspruch 1 oder Anspruch 2, dadurch gekennzeichnet, daß der Materialauftrag auf die Keramikgrundplatte (1) in Dünnfilmtechnik, in Dickschichttechnik, nach einem chemischen Verfahren und/oder nach einem galvanischen Verfahren aufgebracht ist.

## Claims

1. A membrane capacitor for measuring very small changes in pneumatic pressure, more particularly in gas analysis devices with optopneumatic detectors, having a ceramics base plate which supports an annular mandrel over which a metal membrane mounted in a tension ring arrangement is tensioned, said membrane forming one electrode of the membrane capacitor, and having a fixed electrode arranged inside the annular mandrel, said fixed electrode being connected to the ceramics base plate and forming the other electrode of the membrane capacitor, **characterised in that**
  - the ceramics base plate (1) has a cylindrical raised part (1a) which supports the annular mandrel in its outer region and supports the fixed electrode (3) in its inner region,
  - the annular mandrel (2) is formed by material coated on to the ceramics base plate (1), in which the annular mandrel (2) consists of at least two layers (2a, 2b), of which at least the lowermost layer (2a) is formed as a wide ring and the uppermost layer (2b) is formed as a narrow ring which is arranged in the outer region of the wide ring,

- the bearing surface of the annular mandrel (2) for the membrane electrode (4) is convex,
- the fixed electrode (3) is formed by coating a metal layer on to the ceramics base plate (1),
- the metal membrane (4) is mounted between two rings (5, 6), their inner diameter being greater than the outer diameter of the annular mandrel (2) and greater than the outer diameter of the cylindrical raised part (1a) of the ceramics base plate (1),
- the tension ring arrangement formed from the connected rings (5, 6) is connected to the ceramics base plate (1) by at least three screws (7, 8, 9) distributed over the periphery of the tension ring arrangement, in which the tension of the metal membrane (4) can be adjusted by changing the spacing between the rings (5, 6) of the tension ring arrangement and the ceramics base plate (1) and
- a plate spring (10), the inner diameter of which is greater than the outer diameter of the annular mandrel (2), is arranged between the rings (5, 6) of the tension ring arrangement and the ceramics base plate (1).

2. A membrane capacitor according to claim 1, **characterised in that** the plate spring (10) is provided with holes and that the screws (7, 8, 9) are passed through the holes.

3. A membrane capacitor according to claim 1 or claim 2, **characterised in that** the material coating on to the ceramics base plate (1) is applied by thin film technology, by thick layer technology, by a chemical process and/or by a plating process.

**Revendications**

1. Condensateur à membrane pour mesurer de très petites pressions cycliques pneumatiques, notamment dans les appareils d'analyse de gaz à détecteur optopneumatiques, avec une plaque de base en céramique qui porte une couronne annulaire, sur laquelle on tend une membrane métallique maintenue dans un dispositif annulaire de maintien, qui forme l'une des électrodes du condensateur à membrane, et avec une électrode fixe disposée à l'intérieur de la couronne annulaire, qui est reliée à la plaque de base en céramique, et qui forme l'autre électrode du condensateur à membrane, caractérisé en ce que :

- la plaque de base (1) en céramique présente une élévation (1a) cylindrique, qui porte à sa périphérie la couronne annulaire (2) et en son intérieur l'électrode fixe (3),
- la couronne (2) annulaire est constituée par dépôt de matériau sur la plaque de base (1) en céramique, la couronne annulaire (2) étant constituée d'au moins deux couches (2a, 2b) dont au moins la couche inférieure (2a) est constituée en anneau plus large et la couche supérieure (2b) est constituée en anneau plus étroit, qui est placé dans le contour de l'anneau plus large,
- la face d'appui de la couronne annulaire (2) de l'électrode à membrane (4) est arrondie,
- on forme l'électrode fixe (3) par dépôt d'une couche métallique sur la plaque de base (1) en céramique,
- la membrane métallique (4) est maintenue entre deux bagues (5, 6) dont le diamètre intérieur est plus grand que le diamètre extérieur de la couronne annulaire (2) et plus grand que la diamètre externe de l'élévation (1a) cylindrique de la plaque de base (1) en céramique,
- le dispositif annulaire de maintien par les bagues (5, 6) reliées entre elles par au moins trois vis (7, 8, 9) réparties à la périphérie du dispositif annulaire de maintien est relié à la plaque de base (1) en céramique, la tension de la membrane métallique (4) étant obtenue par modification de l'écartement entre les bagues (5, 6) du dispositif annulaire de maintien et la plaque de base (1) en céramique, et
- on place une rondelle Belleville (10), dont le diamètre intérieur est plus grand que le diamètre extérieur de la couronne (2) annulaire, entre les bagues (5, 6) du dispositif annulaire de maintien et la plaque de base (1) en céramique.

2. Condensateur à membrane selon la revendication 1, caractérisé en ce que la rondelle Belleville (10) comprend des trous de passage et que les vis (7, 8, 9) traversent les trous de passage.

**3.** Condensateur à membrane selon la revendication 1 ou la revendication 2, caractérisé en ce qu'on réalise le dépôt de matériau sur la plaque de base (1) en céramique, par technique de film mince, par technique de couche épaisse, selon un procédé chimique et/ou un procédé galvanique.

Fig.1

Schnitt **A-B**

Fig.2

Fig.3

Fig.4

6